# EUROPÄISCHE PATENTSCHRIFT

(11) **EP 1 282 280 B1**
(45) Veröffentlichungstag und Bekanntmachung des Hinweises auf die Patenterteilung: **17.12.2003**
(21) Anmeldenummer: 01440242.4
(22) Anmeldetag: 30.07.2001
(51) Int. Cl.: H04L 29/06

(54) **Verfahren, Steuereinrichtung und Programmmodul zur Steuerung und Lenkung von Datenströmen einer Kommunikationsverbindung zwischen Teilnehmern eines Paketdatennetzes**
Method, control device and program module for controlling and guiding of data streams of a communication connection between two participants of a packet data network
Methode, dispositif de commande et un module de logiciel pour commande et guidage de flux de données de connexion de communication entre deux utilisateurs de réseau de donnée par paquet

(43) Veröffentlichungstag der Anmeldung: 05.02.2003
(73) Patentinhaber: ALCATEL, 75008 Paris (FR)
(72) Erfinder: Schmidt, Hartmut, 71723 Grossbottwar (DE)
(74) Vertreter: Brose, Gerhard

(56) Entgegenhaltungen:
- EP-A- 1 056 259
- WO-A-00/56019
- WO-A-01/10140
- WO-A-01/22720
- MARSHALL W. ET AL: "SIP Extensions for Caller Identity and Privacy" 20. Mai 2001 (2001-05-20) , IETF INTERNET DRAFT , SIP WORKING GROUP XP002183794 draft-ietf-sip-privacy-02.txt Kapitel 3:"Introduction" Kapitel 4:"Protocol Overview" Kapitel 7:"Example of Use" Kapitel 8:"Security Extensions" * Abbildungen 1-3 *
- SIEGMUND G: "SIGNALISIERUNG IM INTERNET SIP HAT NICHT ALS KUENFTIGES 3G-PROTOKOLL EINE ZUKUNFT" ELECTRONICS & COMMUNICATIONS IN JAPAN, PART III - FUNDAMENTAL ELECTRONIC SCIENCE, SCRIPTA TECHNICA. NEW YORK, US, Bd. 84, Nr. 11, 1. Juni 2001 (2001-06-01), Seiten 39-42, XP001019466 ISSN: 1042-0967
- DALGIC I ET AL: "COMPARISON OF H.323 AND SIP FOR IP TELEPHONY SIGNALING" PROCEEDINGS OF THE SPIE, SPIE, BELLINGHAM, VA, US, Bd. 3845, 1999, Seiten 106-122, XP000949839
- HANDLEY M ET AL: "RFC 2543 SIP: Session Initiation Protocol" IETF, März 1999 (1999-03), XP002173547

## Beschreibung

Die Erfindung betrifft ein Verfahren zur Lenkung von Datenströmen oder einer Folge von Datenpaketen zwischen Teilnehmern eines verbindungslosen Paketdatennetzes, sowie ein Paketdatennetz mit Mitteln zur Lenkung von Datenströmen zwischen den Teilnehmern, einer Steuerungseinrichtung und ein Programmmodul hierfür.

Herkömmliche verbindungsorientierte Fernsprechnetze, beispielsweise das öffentliche Festnetz (engl.: Public Switched Telephone Network, PSTN) oder das digitale zelluläre GSM-Mobilfunknetz GSM (GSM: Global System for Mobile Communication) führen zur Herstellung einer Verbindung, d.h. eines Nutzkanals zwischen einem anrufenden und einem angerufenen Teilnehmer ein Signalisierungsprotokoll aus, bei welchem netzseitig zunächst geprüft wird, ob der angerufene Teilnehmer bekannt ist und ob dieser Teilnehmer erreichbar ist. Im positiven Fall erfolgt dann mittels ausgewählter Vermittlungsstellen im Fernsprechnetz die Schaltung der gewünschten Verbindung. Durch netzseitige Überwachungseinrichtungen wird eine wirksame Steuerung und Kontrolle der Verbindungen ermöglicht. So wird jede Verbindung mit einer garantierten Übertragungsbandbreite versorgt; bei drohender Überlast einzelner Netzleitungen können alternative Netzleitungen geschaltet oder weiter eingehende Gesprächswünsche abgelehnt werden. Auch die gesetzlich vorgeschriebene Möglichkeit des Abhörens von bestimmten Gesprächen ist durch die vollständige netzseitige Verbindungskontrolle gewährleistet. Ein angerufener Teilnehmer des Fernsprechnetzes hat weitgehende Möglichkeiten, eingehende Gespräche oder Gesprächswünsche zu kontrollieren. So kann er ein bestehendes Gespräch unterbrechen oder einen Gesprächswunsch ablehnen, wenn, bei Aktivierung der Anrufer-Rufnummernübermittlung (engl.: Calling Line Identification, CLI). eine unerwünschte Rufnummer oder überhaupt keine Rufnummer des angerufenen Teilnehmers übermittelt wird. Andererseits kann ein anrufender Teilnehmer seine Anonymität wahren, indem er die Rufnummernübermittlung zum Endgerät des angerufenen Teilnehmers für einen Anruf oder generell verhindert.

In einem vernetzten verbindungslosen Paketdatennetzwerk kommunizieren die Teilnehmer untereinander ohne Vermittlung von Netzeinrichtungen miteinander. Es werden keine Kommunikationskanäle oder Verbindungswege eingerichtet. An den Netzknoten eines solchen Netzes, sogenannten Routern, wird jedes Datenpaket einzeln auf seine Zieladresse geprüft und dann entsprechend weitergeleitet. Eine Verbindungssicherung kann ausschließlich von Teilnehmer zu Teilnehmer stattfinden. Das bekannteste derartige Netzwerk ist das sogenannte Internet. Die Adressierung von Datenpaketen im Internet erfolgt durch das sogenannte Internet Protokoll (IP), im folgenden IP-Protokoll genannt. Die Teilnehmer des Internet haben keinen direkten Zugang zum Internet. Der Zugang zum Internet erfolgt mittels Zugangsnetzen an bestimmten Zugangspunkten des Internets. Häufig dient das klassische Fernsprechnetz als Zugangsnetz, über welches eine Verbindung zu einem sogenannten (Internet-) Zugangsserver hergestellt wird. Weitere bekannte verbindungslose Paketdatennetze werden durch sogenannte Intranets dargestellt, welche im Gegensatz zum Internet abgeschlossene Netze darstellen.

Die Verbindung eines Intranets zum Internet wird durch bestimmte Sicherheitsknoten überwacht. Ein solcher Sicherheitsknoten, als englischer Begriff "Firewall" geläufig, kontrolliert zum Schutz des Intranets und seiner Teilnehmer eingehende und ausgehende Datenströme nach bestimmten Kriterien und verhindert den Durchlass unerwünschter Datenströme. Unerwünschte Datenströme können beispielsweise in ein Intranet hereinführenden Datenströme bestimmter Absender, bestimmter Datenformate oder bestimmten Inhalts sein; im letzteren Fall müssen die Nutzdaten beispielsweise auf bestimmte Schlüsselworte geprüft werden. Ein derartiger Sicherheitsserver ist jedoch nicht in der Lage, grundsätzlich zwischen sogenannten erwünschten und unerwünschten Datenströmen zu unterscheiden. So können ungefragt eingehende Datenströme, beispielsweise Datenströme mit Werbeinhalten, unerwünscht sein, während die selben Daten bei Anfrage erwünscht sein können. Diese Problematik stellt sich insbesondere bei (Echtzeit-) Datenströmen für Multimediaanwendungen, beispielsweise bei Sprachdaten für die Internet-Telefonie (engl.: voice over IP), welche es außerdem erfordern, Datenströme dynamisch zu überwachen. So wird beispielsweise ein "erlaubter" Datenstrom zwischen zwei Teilnehmern unmittelbar dann zu einem "unerlaubten" Datenstrom, wenn einer dieser Teilnehmer die Verbindung beendet und die damit frei gewordenen Ressourcen bereits anderweitig vergeben sind.

Zukünftige Kommunikationsnetze oder sogenannte "Next Generation Networks" (NGN), insbesondere auch zukünftige Mobilfunknetze nach dem sogenannten UMTS-Standard (UMTS = Universal Mobile Telephone System), werden anders als heutige Netze bis zu den Endkunden als reine Internet Protokoll-basierte Netze realisiert, im folgenden kurz IP-Netze genannt, d.h. jeder Teilnehmer ist dann direkt über seine IP-Adresse adressierbar. Diese Netze können durchaus als abgeschlossene IP-Netze realisiert werden, d.h. Netze, deren Zugang von außen nur über bestimmte Zugangseinrichtungen (engl.: Gateways) möglich ist, weiche den Zugang kontrollieren können. Diese Netze können, wie für heutige Intranets üblich, auch als Netze mit jeweils eigenem IP-Adressraum, d.h. mit nur innerhalb des jeweiligen Netzes eindeutig definierten IP-Adressen realisiert werden.

"Next Generation Networks" werden ein hohes Maß an Echtzeit- oder Multimediakommunikation aufweisen. Dafür ist es jedoch notwendig, entsprechende Steuerungs- und Kontrollmechanismen bestehender Fernsprechnetze, insbesondere die Garantie bestimmter Qualitätsstandards, einen weitgehenden Schutz der Teilnehmer und des Netzes und nicht zuletzt eine lückenlose Vergebührung von Kommunikationsdiensten zu realisieren. Bestehende IP-Netze ermöglichen jedoch eine derartige Steuerung und Kontrolle in nur unzureichender Weise. Zur Durchführung einer Anrufsignalisierung im Internet kann beispielsweise das von der Internet Engineering Task Force (IETF) vorgeschlagene sogenannte Session Initiation Protocol (SIP), RFC 2543 verwendet werden.

In diesem Zusammenhang existiert ein Entwurf der Internet Engineering Task Force zur Sicherstellung der Anonymität von Anrufern mit dem Titel "SIP Extensions for Coller Identity and Privacy" als sogenannter IETF Internet Draft. Dort wird eine Erweiterung des Session Initiation Protocol vorgeschlagen, welche es ermöglicht, mittels sogenannter "trusted intermediaries" oder "Proxy-Server" eine Anrufsignalisierung unter Teilnehmern durchzuführen, ohne dass diese sie identifizierende Adressinformation untereinander weitergegeben werden müssen. Weiter wird dort eine Architektur mit einem sogenannten Anonymisierer (engl.: anonymizer) gezeigt, welche es ermöglicht, Nutzdaten zwischen den Teilnehmen auszutauschen, ohne dass die Internetprotokoll- (IP) Adressen der Teilnehmer jeweils gegenseitig bekannt werden. Dies wird beispielsweise dadurch erreicht, dass die Teilnehmereinrichtungen die Nutzdaten jeweils an den Anonymisierer richten, welcher dann die weitere Vermittlung der Daten an den jeweils gewünschten Teilnehmer vornimmt.

Das vorhin genannte Dokument geht davon aus, dass der Anonymisierer und damit seine Adresse bei den Teilnehmern vorher bekannt ist oder ein Teilnehmer einen bestimmten Anonymisierer auswählt. Die Interaktion zwischen diesem Anonymisierer und den oben genannten Proxy-Servern wird dort nicht näher ausgeführt. In einem großen Kommunikationsnetz können jedoch eine Vielzahl von Netzeinrichtungen zur Nutzdatenweiterleitung vorhanden sein, welche jeweils eine Anonymisierung der Nutzdaten durchführen sollen. Für den Teilnehmer soll die Netzstruktur vollkommen transparent bleiben, d.h. die Vermittlung seiner Daten im Netz soll, analog zur Vermittlung der Daten in heutigen Fernsprechnetzen, alleine vom Netz gesteuert werden. Dazu muss jedoch eine enge Kopplung zwischen Signalisierungseinrichtungen und Nutzdatenweiterleitungseinrichtungen bestehen.

Der Erfindung liegt die Aufgabe zugrunde, ein Verfahren und entsprechende Mittel zu schaffen um die oben beschriebene Steuerungsund Kontrollmechanismen bestehender Fernsprechnetze in einem auf dem verbindungslosen Paketdatennetz für die Übertragung von Echtzeit-Datenströmen zu realisieren; wobei sowohl eine wirkungsvolle Anonymisierung der Teilnehmer als auch eine netzseitige Steuerung und Überwachung der Datenströme ermöglicht wird.

Diese Aufgabe wird erfindungsgemäß gelöst durch Verfahren nach der Lehre des Anspruchs 1, ein Paketdatennetz nach der Lehre des Anspruchs 10, eine Steuerungseinrichtung nach der Lehre des Anspruchs 11 und ein Programmmodul nach der Lehre des Anspruchs 12.

Der Grundgedanke der Erfindung ist der, dass zur Einrichtung einer Kommunikationssitzung zwischen Teilnehmern eines verbindungslosen Paketdatennetzes zunächst eine Anrufsignalisierung durchgeführt wird, beispielsweise nach dem oben beschriebenen Session Initiation Protocol (SIP). In diesem Zusammenhang übermittelt der anrufende Teilnehmer eine Anfrage zu einer Kommunikationssitzung mit einem weiteren oder angerufenen Teilnehmer an eine Steuerungseinrichtung: Diese Steuerungseinrichtung ermittelt dann die dem anrufenden Teilnehmer unbekannte Netzadresse des angerufenen Teilnehmers. Die Steuerungseinrichtung bestimmt dann einen oder eine Folge von Netzknoten, über welche die zwischen den Teilnehmern auszutauschenden Datenpakete geführt werden soll. Wenn beispielsweise ein einziger Netzknoten bestimmt wird, übermittelt die Steuerungseinrichtung den Teilnehmern jeweils die Netzadresse dieses Netzknotens, um die genannten Datenpakete an diesen Netzknoten zu übermitteln. Der Netzknoten erhält die Netzadressen der Teilnehmer und eine Anweisung, Datenpakete jeweils eines Teilnehmers der Kommunikationssitzung an den jeweils anderen Teilnehmer unter Austausch der Netzadressen zu übermitteln.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Fig. 1: zeigt ein Paketdatennetz zur Ausführung eines dem Stand der Technik gemäßen Verfahrens zur Herstellung einer Kommunikationsverbindung,
- Fig.2: zeigt ein Multimedianetz zur Ausführung eines erfindungsgemäßen Verfahrens zur Herstellung einer Kommunikationsverbindung und
- Fig.3: zeigt ein Multimedianetz gemäß Fig.2 mit einer Schnittstelle zum Internet.

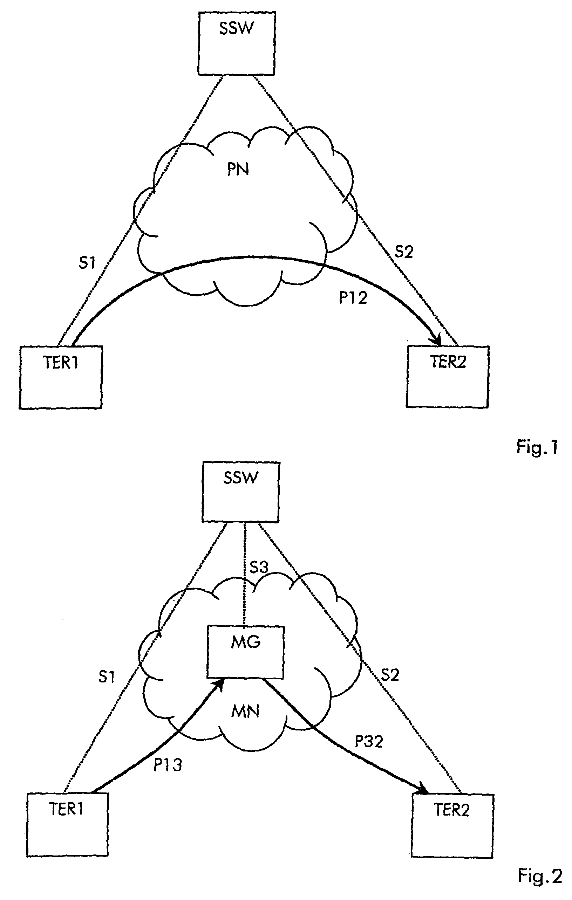

Fig.1 zeigt ein Paketdatennetz PN zur Ausführung eines dem Stand der Technik gemäßen Verfahrens zur Herstellung einer (Multimedia-) Kommunikationsverbindung zwischen zwei Teilnehmern. Dazu ist hier das Paketdatennetz PN, eine Steuerungseinrichtung SSW ein erstes Endgerät TER1, im folgenden auch erster Teilnehmer TER1 genannt, und ein zweites Endgerät TER2, im folgenden auch zweiter Teilnehmer TER2 genannt eingezeichnet. Jeweils zwischen der Steuerungseinrichtung SSW und dem ersten Teilnehmer TER1 und dem zweiten Teilnehmer TER2 sind als gestichelte Linien dargestellte erste und zweite Signalisierungsverbindungen S1 und S2 eingezeichnet. Diese Signalisierungsverbindungen S1 und S2 bestehen jeweils aus einer Anzahl von bestimmten Signalisierungspaketen. Ein durchgezogener Doppelpfeil symbolisiert eine Datenrelation P12 zwischen dem ersten Teilnehmer TER1 und dem zweiten Teilnehmer TER2, wobei diese Datenrelation aus Datenströmen oder Folgen von Datenpaketen für eine oder mehrere Multimediaanwendungen besteht.

Im folgenden soll davon ausgegangen werden, dass die Adressierung im Paketdatennetz PN mittels des genannten Internetprotokolls erfolgt. Zum Aufbau einer Kommunikationsverbindung zwischen den Teilnehmern wird eine Anrufsignalisierung durchgeführt, beispielsweise das oben genannte Session Initiation Protocol (SIP) oder eine durch die International Telecommunication Union im Zusammenhang mit dem Dokument "packetbased multimedia communications systems", ITU-T Recommendation H.323 beschriebene Anrufsignalisierung, im folgenden kurz H323-Protokoll genannt. Diese Protokolle definieren jeweils die oben genannten Signalisierungspakete S1 und S2 und ihre Abfolgen je nach Eintritt verschiedener Situationen. Im folgenden wird daher hier nicht auf Strukturen, Inhalte und Abfolgen einzelner Signalisierungspakete eingegangen, sonder nur der mit diesen Signalisierungspaketen einhergehende wesentliche Informationsaustausch beschrieben: Der erste Teilnehmer TER1 übermittelt der Steuerungseinrichtung SSW eine Aufforderung oder Anfrage zu einer Kommunikationsverbindung mit dem zweiten Teilnehmer TER2 und eine diesen Teilnehmer eindeutig identifizierende Nummer oder Zeichenfolge, beispielsweise seine Rufnummer. Die Steuerungseinrichtung SSW, im Rahmen des H323-Protokolls auch als Gatekeeper und im Rahmen des Session Initiation Protocol (SIP) als Proxy-Server bezeichnet wird, ermittelt die IP-Adresse des zweiten Teilnehmers TER2, beispielsweise mittels einer hier nicht dargestellten Adress-Datenbank, und informiert den zweiten Teilnehmer TER2 über den Anruf. Der zweite Teilnehmer TER2 übermittelt, falls er den Anruf annehmen will, seine Zustimmung zu diesem Anruf und eine UDP-Adresse zur Adressierung einer bestimmten Ressource an die Steuerungseinrichtung SSW. Die Steuerungseinrichtung SSW übermittelt nun die IP-Adresse und UDP-Adresse des zweiten Teilnehmers an den ersten Teilnehmer TER1. Der erste Teilnehmer TER1 beginnt nun, ohne weitere Vermittlung der Steuerungseinrichtung SSW mit dem Senden von Datenpaketen P12, unter Verwendung der erhaltenen Adressen des zweiten Teilnehmers TER2 als Bestimmungsadresse, direkt an den zweiten Teilnehmer. Der zweite Teilnehmer TER2 kann dabei die IP-Adresse oder die UDP-Adresse des ersten Teilnehmers TER1 direkt aus dem entsprechenden Protokollinformation des empfangenen Datagramms entnehmen.

Das Internet Protokoll stellt die charakterisierende Protokollschicht der Protokollfolge des Paketdatennetzes PN dar. Diese Schicht stellt die sogenannte Vermittlungsschicht (engl.: network layer) des sogenannten OSI-Schichtenmodells (OSI = Open System Interconnection) dar. Die Vermittlungsschicht dient der Netzverbindung zwischen (End-) Teilnehmern. Während in einem leitungsgebundenen Kommunikationsnetz, beispielsweise dem öffentlichen Fernsprechnetz (engl.: Public Switched Telephone Network, PSTN) zum Datenaustausch zwischen Teilnehmern eine physikalische Verbindung aufgebaut oder Leitung geschaltet werden muss, kann in einem IP-Netz, soweit keine entsprechenden Vorkehrungen getroffen werden, prinzipiell jeder Teilnehmer jeden anderen Teilnehmer ohne vermittelnde Netzwerkeinrichtungen erreichen. Es erfolgt hier kein Verbindungsaufbau. Die Adressierung der Datenpakete oder erfolgt direkt von Teilnehmer zu Teilnehmer. Dazu trägt der sendende Teilnehmer sowohl seine Senderadresse (engl.: source address) als auch die Empfängeradresse (engl.: destination address) in den Kopfteil (engl.: header) für jedes Datenpaket ein. Dieser Kopfteil zusammen mit einem Nutzteil, hier auch Nutzdatenpaket genannt, stellt ein sogenanntes (IP-) Datagramm dar.

Zur Adressierung einer von verschiedenen Anwendungen eines Teilnehmers wird für Echtzeitanwendungen das sogenannte User Data Protocol (UDP) verwendet, Dieses Protokoll stellt die sogenannte Transportschicht (engl.: transport layer) der Protokollfolge eines Echtzeit-IP-Netzes dar. Dieses Protokoll weist Gegensatz zum sogenannten Transmission Control Protocol (TCP), welches für Datendienste im Internet verwendet wird, keine Verbindungskontrolle auf. Das Transmission Control Protocol weist umfangreiche Kontrollmechanismen zur Kontrolle einer korrekten Datenübermittlung auf, ist jedoch insbesondere wegen der Vorsehung von wiederholtem Senden von Datenpaketen im Fehlerfall für Echtzeitanwendungen ungeeignet. Das User Data Protocol dient im wesentlichen dazu, eine von verschiedene Ressourcen eines Teilnehmers, ein sogenanntes UDP-Port, zu adressieren und sieht keine Empfangs- und Sequenzüberwachung von Datenpaketen vor.

Zur Sequenzüberwachung und Überwachung des Zeitverhaltens wird das sogenannte Real-time Transport Protocol (RTP) verwendet. Dieses von der Internet Engineering Task Force (IETF) als RFC 1889 vorgeschlagene Protokoll kann als zur oben beschriebenen Transportschicht zugehörig betrachtet werden.

Zukünftige Kommunikationsnetze werden, wie oben beschrieben, zunehmend als reine IP-Netze realisiert, welche zu einem erheblichen Anteil Multimedia-Anwendungen mit Echtzeitanforderungen aufweisen. Dabei ergeben sich eine Reihe von Problemen: Multimedia-Anwendungen bedürfen garantierter Bandbreiten und garantierten maximalen Übertragungsverzögerungen. Im Gegensatz zu leitungsgebundenen Fernsprechnetzen können diese Forderungen in IP-Netzen mangels Kontroll- und Steuerungsmöglichkeiten des Datenverkehrs nicht ohne weiteres erfüllt werden. Weiter fehlt die in leitungsgebundene Netzen existierende Möglichkeit zum gesetzlich festgelegten und unerkanntem Abhören von Gesprächen (engl.: legal interception). Wegen der prinzipiell freien Adressierung in IP-Netzen ist es möglich, dass jeder Teilnehmer unkontrolliert Daten an jeden Teilnehmer senden kann. Nicht zuletzt aufgrund der Echtzeitbedingungen von Multimedia-Anwendungen ist eine umfassende Kontrolle zur Abwehr unerwünschter Daten, beispielsweise mittels einer oben genannten Firewall, nicht möglich. Eine Kategorie unerwünschter Daten betrifft dabei solche Datenpakete, welche ungefragt vielfach, d.h. in kurzen Zeitabständen, gegebenenfalls von verschiedenen Quellen, an stets dieselben Teilnehmer oder Netzeinrichtung versendet werden. Derartige Datenattacken oder Datenangriffe können, falls sie nicht abgewehrt werden können, zur völligen Überlastung einer Netzeinrichtung oder eines Teilnehmers führen, welche zur Folge hat, dass diese Netzeinrichtung oder dieser Teilnehmer keinen Dienst mehr erbringen kann (engl.: denial of service).

Zur Überwindung der oben genannten Probleme stellt Fig.2 schematisch ein erfindungsgemäßes Paketdatennetz für Multimedia-Anwendungen dar, im folgenden kurz Multimedianetz MN genannt. Das Multimedia-Paketdatennetz MN weist gegenüber dem in Fig.1 dargestellten Paketdatennetz PN einen Netzknoten MG auf (engl.: Media Gateway). Weiter ist, aus Fig.1 bekannt, die Steuerungseinrichtung SSW der erste Teilnehmer TER1 und der zweite Teilnehmer TER2 eingezeichnet. Jeweils zwischen der Steuerungseinrichtung SSW und dem ersten Teilnehmer TER1 und dem zweiten Teilnehmer TER2 sind als gestichelte Linien dargestellte erste und zweite Signalisierungsverbindungen S1 und S2 wieder eingezeichnet. Zusätzlich ist eine dritte Signalisierungsverbindung S3 zwischen der Steuerungseinrichtung SSW und dem Netzknoten MG eingezeichnet. Statt einer Datenrelation P12 unmittelbar zwischen dem ersten Teilnehmer TER1 und dem zweiten Teilnehmer TER2 sind hier jeweils eine erste Datenrelation P13 und eine zweite Datenrelation P23 zwischen dem ersten Teilnehmer TER1 bzw. dem zweiten Teilnehmer TER2 und dem Netzknoten MG, wieder als durchgezogene Doppelpfeile symbolisiert, eingezeichnet.

Das unter Fig.1 beschriebenen Verfahren ermöglicht zwar eine anonyme Anrufsignalisierung, jedoch keine anonyme Übermittlung von Daten. Sender und Empfänger müssen jeweils ihre Adressen gegenseitig kennen, um Daten austauschen zu können. Selbst wenn davon ausgegangen würde, dass IP-Adressen nur kurzfristig und kurzzeitig vergeben werden, wären nachfolgende Datenübermittlungen eines an einem Anruf beteiligten Teilnehmer an den anderen Teilnehmer solange möglich, bis seine IP-Adresse zurückgenommen oder ungültig würde. Beim hier vorgestellte Verfahren mit einem (zentralen) Netzknoten MG oder einer Reihe entsprechender Netzknoten findet hingegen eine umfassende Kontrolle aller Datenströme statt. Dieses Verfahren bietet darüber hinaus eine Reihe von Vorteilen:
- Anonymisierung von Datenströmen,
- Einschränkung oder Ausschluss unkontrollierter Datenkommunikation,
- Schnittstellen für gesetzliches Abhören,
- Kapazitätssteuerung und Kapazitätslenkung
- Übermittlung von Ankündigungen und
- Schnittstellen für eine komfortable Gebührenerfassung.

Zum Aufbau einer Kommunikationsverbindung zwischen den Teilnehmern des Multimedianetzes MN wird, wie unter Fig. 1 beschrieben, eine Anrufsignalisierung mittels eines geeigneten Signalisierungsprotokolls, beispielsweise das Session Initiation Protocol (SIP), durchgeführt. Der damit einhergehende Informationsaustausch soll im folgenden funktional und unabhängig von gewählten Protokoll beschrieben werden. Ein größeres Multimedianetz MN wird aus Gründen höherer Verfügbarkeit (Zuverlässigkeit) und besseren Strukturierbarkeit des Netzes vorteilhaft mit einer Reihe solcher Netzknoten MG versehen. Im folgenden soll ein Ausführungsbeispiel eines erfindungsgemäßen Verfahrens aus Gründen der Einfachheit mit nur einem beteiligten Netzknoten MG beschrieben werden:

Der erste Teilnehmer TER1 übermittelt der Steuerungseinrichtung SSW eine Aufforderung oder Anfrage zu einer Kommunikationsverbindung mit dem zweiten Teilnehmer TER2 und eine diesen Teilnehmer eindeutig identifizierende Nummer oder Zeichenfolge, beispielsweise seine Rufnummer. Die Steuerungseinrichtung SSW, welche aus einem zentralen Rechner oder Rechnerverbund oder einem räumlich verteilten dezentralen Rechnerverbund bestehen kann, ermittelt die IP-Adresse des zweiten Teilnehmers TER2 und bestimmt einen Netzknoten MG, über welchen der Datenverkehr führen soll. Die Steuerungseinrichtung SSW informiert den zweiten Teilnehmer TER2 über den Anruf des ersten Teilnehmers TER1. Der zweite Teilnehmer TER2 übermittelt, falls er den Anruf annehmen will, seine Zustimmung zu diesem Anruf an die Steuerungseinrichtung SSW. Im Rahmen dieser Anrufsignalisierung übermitteln beide Teilnehmer TER1 und TER2 auch die jeweils für die Adressierung einer bestimmten Ressource bestimmte UDP-Adresse an die Steuerungseinrichtung SSW Die Steuerungseinrichtung SSW übermittelt nun über die Signalisierungsverbindungen S1 und S2 jeweils die IP-Adresse des Netzknotens MG und die entsprechende UDP-Adresse dieses Netzknotens MG an den ersten Teilnehmer TER1 bzw. and den zweiten Teilnehmer TER2. Diese Ressource des Netzknotens MG entspricht eine bestimmte Kommunikationssitzung. Über die dritte Signalisierungsverbindung S3 wird dem Netzknoten MG die IP-Adresse und die UDP-Adresse jedes Teilnehmers TER1 und TER2 mitgeteilt. Die IP-Adresse eines Teilnehmers oder Netzknotens und UDP-Adresse der bestimmten Ressource bilden dabei für jede Kommunikationssitzung ein festes Tupel oder eine feste Zuordnung, welche im Netzknoten auch überprüft werden kann.

Der erste Teilnehmer TER1 sendet Datagramme der ersten Datenrelation P12 an den Netzknoten GW. Dieser Netzknoten GW prüft die Gültigkeit dieser Datagramme, d.h. die richtige Zuordnung von Ursprungs und Zielangaben und sendet sie, unter Austausch der Ursprungs- und Zieladresse, d.h. der entsprechenden IP-Adressen und UDP-Adressen, als Datagramme der zweiten Datenrelation P23 an den zweiten Teilnehmer. Die Datenübermittlung in Gegenrichtung wird entsprechend durchgeführt. Wenn einer der Teilnehmer das Ende dieser Kommunikation an die Steuerungseinrichtung SSW signalisiert oder die Steuerungseinrichtung ein das Ende dieser Kommunikation bestimmt, so informiert sie den Netzknoten MG, welcher dann eventuell nachfolgende Daten nicht mehr weitervermittelt.

Durch den Austausch der IP-Adressen bleiben beide Teilnehmer anonym, soweit sie nicht bewusst ihre Identitäten mitteilen. Jeder Teilnehmer hat die Möglichkeit, zu jeder Zeit die Kommunikation zu beenden, ohne dass er befürchten muss ungewollt weitere Daten zu erhalten. Dadurch dass der gesamte Datenverkehr kontrolliert über bestimmte Netzknoten GW geführt wird, welche sich in einem geschützten Bereich (engl.: inside a trusted boundary) des Multimedianetzes MN befinden, können auch keinerlei Datenangriffe durchgeführt werden.

Für eine Gebührenermittlung und für ein gesetzmäßiges Abhören von Datenströmen können diese Netzknoten GW mit jeweils einer gesicherten Schnittstelle versehen werden. Da die Schaffung neuer Netze hoher Investitionen bedarf, reichen die Tarifierungsmöglichkeiten in bestehenden IP-Netzen nicht aus. Durch die kontrollierte Lenkung des Datenverkehrs entsprechend den heutigen Fernsprechnetzen kann auch eine entsprechende komfortable Tarifierung (d.h. Implementierung verschiedener Tarifmodelle) und eine umfassende Gebührenerfassung (d.h. Ausschluss von Umgehungsmöglichkeiten) unterstützt werden. Die Netzknoten GW können dazu zu jeder Kommunikationssitzung genaue Daten, beispielsweise die akkumulierte Verbindungsdauer, und/oder die akkumulierte übertragene Datenmenge an eine hier nicht weiter beschriebene Vergebührungseinrichtung übergeben.

Bisher wurde stets von Kommunikationssitzungen zwischen zwei Teilnehmern TER1 und TER2 ausgegangen. Selbstverständlich können auch mehrere Teilnehmer an einer Kommunikationssitzung beteiligt werden. Bestehende Anrufprotokolle (SIP, H323) bieten zu Anrufsignalisierung zwischen mehreren Teilnehmern entsprechende Möglichkeiten. Jedem an der Kommunikationssitzung beteiligten Netzknoten MG wird dann für jede ihn betreffende Quelladresse eine Liste entsprechender Zieladressen (weitere Netzknoten und/oder Teilnehmer) übermittelt. Die Identifikation einer Kommunikationssitzung im Netzknoten MG erfolgt, wie vorhin beschrieben, mittels der UDP-Adresse. Dadurch ist das Hinzunehmen und Reduzieren von Teilnehmern einer Kommunikationssitzung ohne Eingriffe der übrigen Teilnehmer möglich; d.h. die Steuerung der Datenströme erfolgt ohne Eingriffe der Teilnehmer. Die für einen Teilnehmer bestimmte Datenströme mehrerer weiterer Teilnehmer werden dabei im Netzknoten MG zusammengefasst. Dazu werden die entsprechenden RTP-Datenströme in diesem Netzknoten MG unterbrochen und ein neuer RTP-Datenstrom erzeugt.

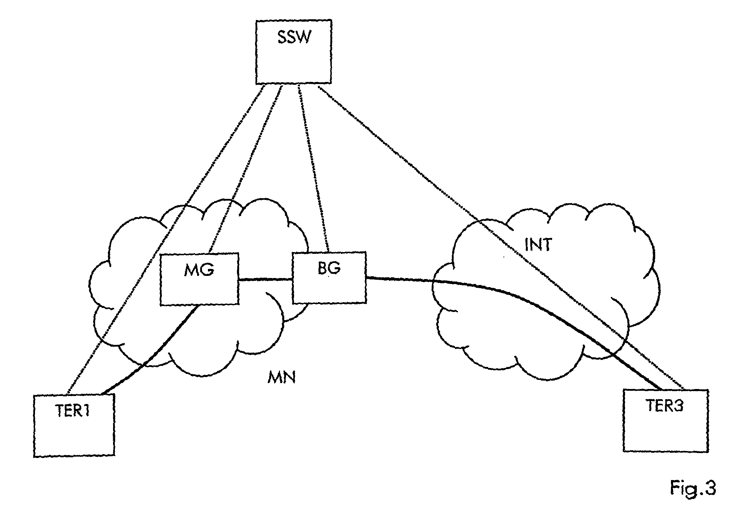

Anhand der Fig. 3 soll eine Kommunikation eines Teilnehmers aus einem erfindungsgemäßen Paketdatennetz gemäß Fig.2 mit einem Teilnehmer des Internets beschrieben werden. Dazu zeigt Fig.3 das Multimedianetz MN mit dem Netzknoten MG und eine Steuerungseinrichtung SSW aus Fig.2. Zusätzlich ist ein Grenzknoten BG (engl.: Border Gateway) eingezeichnet, welcher mit dem Internet INT verbunden ist. An das Internet INT ist ein dritter Teilnehmer TER3 angeschlossen. Jeweils eine durchgezogene Linie verbindet den ersten Teilnehmer TER1 mit dem Netzknoten MG, den Netzknoten MG mit dem Grenzknoten BG und den Grenzknoten BG über das Internet INT mit dem dritten Teilnehmer TER3. Diese Linien symbolisieren eine Nutzdatenrelation zwischen dem ersten und dem dritten Teilnehmer TER1 und TER3. Gestrichelte Linien verbinden die Steuerungseinrichtung SSW jeweils mit dem ersten Teilnehmer TER1, dem Netzknoten MG, dem Grenzknoten BG und dem dritten Teilnehmer TER3. Diese gestrichelten Linien symbolisieren wie in den vorangehenden Figuren Signalisierungsverbindungen und bestehen jeweils aus einer Anzahl von bestimmten Signalisierungspaketen.

Zum Aufbau einer Kommunikationsverbindung zwischen dem ersten Teilnehmer TER1 des Multimedianetzes MN und dem dritten Teilnehmer TER3 des Internets INT wird, wie unter den vorangehenden Figuren beschrieben, ein oder mehrere geeignete Signalisierungsprotokolle ausgewählt. Im folgenden soll ein beispielhafter Protokollablauf funktional beschrieben werden. Da es hier vor allem darum geht, das Multimedianetz MN und seine Teilnehmer TER1 wirksam gegen unerwünschte Daten von außerhalb zu schützen, soll hier ein Anruf des ersten Teilnehmers TER1 vom dritten Teilnehmer TER3 aus beschrieben werden. Der dritte Teilnehmer TER1 übermittelt der Steuerungseinrichtung SSW eine Aufforderung oder Anfrage zu einer Kommunikationsverbindung mit dem ersten Teilnehmer TER1. Die Steuerungseinrichtung SSW ermittelt die IP-Adresse des ersten Teilnehmers TER1 und informiert diesen Teilnehmer über den Anruf des dritten Teilnehmers TER3. Der erste Teilnehmer TER1 übermittelt, falls er den Anruf annehmen will, seine Zustimmung zu diesem Anruf an die Steuerungseinrichtung SSW. Die Steuerungseinrichtung SSW übermittelt nun die Adresse (IP-Adresse und UDP-Adresse) des Netzknotens MG und die Adressen sowohl des Netzknotens MG als auch des dritten Teilnehmers TER3 an den Grenzknoten BG und die Adresse des Grenzknotens BG an den dritten Teilnehmer TER3. Mit diesen Adresseninformationen können Datenpakete der Kommunikationssitzung vom ersten Teilnehmer TER1 über den Netzknoten MG, den Grenzknoten BG zum dritten Teilnehmer TER3 und umgekehrt von dort über den Grenzknoten BG, den Netzknoten MG zum ersten Teilnehmer TER1 gesendet werden.

Wird die Kommunikationssitzung, beispielsweise initiiert durch den ersten Teilnehmer TER1, beendet, so wird der Grenzknoten BG, wie auch der Netzknoten MG entsprechend informiert. Der Grenzknoten BG nimmt dann eventuell weitere vom dritten Teilnehmers TER3 gesendete Daten nicht mehr an. Der Grenzknoten BG verhindert, dass unerwünschte Daten an irgendeinen Teilnehmer oder irgendeine Netzwerkeinrichtung des Multimedianetzes MN gelangen. Damit ist es unmöglich, von außerhalb des Multimedianetzes MN beispielsweise einen Datenangriff zur Blockade des Multimedianetzes MN oder Einrichtungen dieses Netzes zu führen. Die einzige Einrichtung, die blockiert werden könnte, ist der Grenzknoten BG. Eine Blockade dieses Knotens führt jedoch innerhalb des Multimedianetzes MN zu keinerlei Beeinträchtigung.

Analog zum Fall der Kopplung des erfindungsgemäßen (abgeschlossenen) Multimedianetzes MN an das (offene) Internet INT kann auch die Kopplung mehrerer Multimedianetze MN untereinander realisiert werden. Dabei weist jedes dieser Netze eine eigene Steuerungseinrichtung auf. Da ein angerufener Teilnehmer eines fremden Netzes im Netz des anrufenden Teilnehmers nicht bekannt ist, übergibt die Steuerungseinrichtung des anrufenden Netzes die Rufnummer des angerufenen Teilnehmers an die Steuerungseinrichtung des fremden Netzes. Beide Steuerungseinrichtungen geben dann gegenseitig die IP-Adressen jeweils ihres Grenzknotens bekannt, über welche die Kommunikation geführt werden soll.

In einer weiteren Ausführung werden die Nutzdaten zwischen den Grenzkonten (BG) jeweils eines ersten und eines zweiten Multimedianetzes verschlüsselt übermittelt. Dies ist insbesondere dann vorteilhaft, wenn diese Multimedianetze MN von zwei miteinander kooperierenden Netzbetreibern betrieben werden oder diese Multimedianetze zwei räumlich getrennte Teilnetze eines Netzbetreibers darstellen, welche er über fremde Leitungen, ein fremdes Netz oder das Internet miteinander verbunden werden. Zusätzlich oder alternativ können die Nutzdaten komprimiert. Ein sendender Netzknoten MG an der Grenze eines ersten Teilnetzes komprimiert und/oder verschlüsselt dazu alle and einen empfangenden Grenzknoten MG eines zweiten Teilnetzes zu übermittelnden Daten. Der empfangende Netzknoten führt dann eine entsprechende Entschlüsselung und/oder Dekomprimierung durch. Durch eine Komprimierung lassen sich beispielsweise auf einer langen Übertragungsstrecke die vorhandenen Übertragungskapazitäten optimal nutzen.

Es ist auch möglich, das erfindungsgemäße Multimedianetzes MN an ein leitungsgebundenes Fernsprechnetz anzuschließen. Dazu findet in einem bestimmten Netzknoten, beispielsweise in einem Grenzknoten BG des Fernsprechnetzes, eine Protokollumwandlung statt. Eine Protokollumwandlung ist beispielsweise an Übergängen vom Festnetz zu einem Mobilfunknetz notwendig, da die im Mobilfunknetz verwendeten sogenannten Codecs im Festnetz unbekannt sind. Die Nutzdaten der empfangenen IP-Datenpakete werden dann entsprechend umcodiert und es wird ein dezidierter Kommunikationskanal zwischen diesem Grenzknoten zum entsprechenden Teilnehmer des Fernsprechnetzes eingerichtet, auf welchem die umcodierten Daten übermittelt werden. Die Einrichtung dieses Kommunikationskanals wird durch eine Steuerungseinrichtung des leitungsgebundenen Fernsprechnetzes initiiert, welche mit der Steuerungseinrichtung SSW des Multimedianetzes MN verbunden ist.

Es ist auch möglich, abgeschlossene Zugangsnetze zu einem Multimedianetz MN zu schaffen. In beiden Netzten werden dann die gleichen beschriebenen Datenstrom-Lenkungsmechanismen durchgeführt. Häufig werden sich dabei feste Zuordnungen zwischen dem Grenzknoten BG eines Zugangsnetzes und einem für dieses Zughangsnetz vorgesehenen Grenzknoten des Multimedianetzes ergeben. Wegen der festen Zuordnung ist nur eine reduzierte Adressierung zwischen diesen Knoten notwendig; insbesondere entfällt die Notwendigkeit der gegenseitige Übermittlung der IP-Adressen. In diesem Fall findet vorteilhaft eine sogenannte Protokollkopfkomprimierung (engl.: header compression) für die zwischen diesen Knoten übertragenen Daten statt.

In Zugangsnetzen zu einem Multimedianetz MN muss sichergestellt werden, dass die den Teilnehmern eingeräumte Bandbreite nicht überschritten wird. Das Zugangsnetz überwacht die Einhaltung von abgesprochenen oder festgelegten Bandbreiten. Wird die Bandbreite überschritten, so kann das Netz unterschiedlich reagieren. So kann beispielsweise die Priorität für Pakete in der überschrittenen Bandbreite herabgesetzt werden. Herkömmliche IP-Netze behandeln gemischt sowohl sogenannte TCP/IP-Daten, d.h. Daten die sporadisch auftreten und nur für einen kurzen Zeitraum einem Datenstrom zuzuordnen sind (z.B. ein HTTP-Datenstrom zwischen einem Internet-Server und einem Internet-Endgerät), und stromorientierten Echtzeitdaten oder Datenströmen. Nur diese Echtzeitdaten müssen privilegiert behandelt (z.B. bezüglich Echtzeitanforderungen) und daher in ihrer Bandbreite überwacht werden. Die übrigen Daten werden, so . weit Ressourcen vorhanden sind, gemäß des sogenannten "best effort"-Mode, d.h. so gut wie möglich, behandelt. Die Mischung aller dieser Daten bringt es mit sich, dass ein zur Bandbreitenüberwachung eingesetzter Netzknoten, beispielsweise ein Zugangsknoten oder Network Access Server (NAS), zunächst nicht-privilegierte Daten von privilegierten Daten unterscheiden und aus diesen privilegierten Daten Multimedia-Datenströme identifizieren und einzelnen Datenbeziehungen zuordnen muss. Erst dann kann eine Überwachung der Daten einer Datenbeziehung erfolgen. Zur Identifizierung dieser Multimedia-Datenströme muss gegebenenfalls Information aus verschiedenen Protokollschichten ausgewertet werden, was zu einem hohen Aufwand für den IP-Router führt.

Erfindungsgemäß findet eine frühe Trennung von Multimedia Daten und übrigen Daten in einer Zugangseinrichtung des Zugangsnetzes statt. Der Netzknoten MG erhält dann ausschließlich gleichartige und gleich zu behandelnde Multimedia-Datenströme, über welche er bereits von der Steuerungseinrichtung SSW informiert ist. Durch diese frühe Trennung von privilegiert zu behandelnden Daten und übrigen Daten kann der Aufwand zur Behandlung der übrigen Daten gering gehalten werden (sogenannte hop-by-hop-Kontrolle von Bandbreiten). Auch wird der Aufwand der Bandbreitenkontrolle im Netzknoten MG gering gehalten, da keine aufwendige Unterscheidung verschiedenartiger Daten und Zuordnung zu einzelnen Multimedia-Datenströmen erforderlich ist.

Der Grenzknoten des Zugangsnetzes kann zusätzlich eine Verbindung zum (offenen) Internet aufweisen. Ein Teilnehmer des Zugangsnetzes kann dann wählen, ob er eine Verbindung zum entsprechenden Multimedianetz MN oder zum Internet wünscht. Die Unterscheidung erfolgt beispielsweise aufgrund der Zieladresse.

Die mit Hilfe der Netzknoten oder Grenzknoten abgeschlossenen Multimedianetze weisen jeweils einen eigenen IP-Adressbereich auf. IP-Adressen haben nur im jeweils abgeschlossenen Netz ihre Gültigkeit. Dadurch kann in jedem Netz der gesamte IP Adressraum, für die Version 4 des Internetprotokolls beispielsweise 32 bit, genutzt werden. Während dieser Adressraum für ein abgeschlossenes Netz bei weitem ausreicht, werden die IP-Adressen weltweit knapp. Zukünftige offene Netze oder Teilnetze müssen daher für die Version 6 des Internetprotokolls mit einem deutlich erweiterten Adressraum realisiert werden, während diese Notwendigkeit für die hier betrachteten Multimedianetze entfällt.

## Patentansprüche

1. Verfahren zur Lenkung einer Folge von (Kommunikations-) Datenpaketen zwischen Teilnehmern (TER1, TER2) eines verbindungslosen Paketdatennetzes (MN), wobei zwischen einem anrufenden Teilnehmer (TER1), einer Steuerungseinrichtung (SSW) und einem angerufenen Teilnehmer (TER2) eine Signalisierung durchgeführt wird, in dessen Verlauf der anrufende Teilnehmer (TER1) eine Anfrage zu einer Kommunikationssitzung mit dem angerufenen Teilnehmer (TER2) an die Steuerungseinrichtung (SSW) übermittelt und wobei diese Steuerungseinrichtung (SSW) eine Netzadresse des angerufenen Teilnehmers (TER2) ermittelt, **dadurch gekennzeichnet, dass** die Steuerungseinrichtung (SSW) einen Netzknoten (MG) oder eine bestimmte Reihenfolge mehrerer Netzknoten (MG) aus einer Anzahl von Netzknoten (MG) bestimmt, über welche die in Zusammenhang mit der Kommunikationssitzung von einem Teilnehmer (TER1) zum anderen Teilnehmer (TER2) zu übermittelnden Datenpakete geführt werden sollen und den von der Kommunikationssitzung betroffenen Teilnehmern (TER1, TER2) und dem/den bestimmten Netzknoten (MG) jeweils notwendige Adressinformation zum Übergeben oder Weiterleiten der Datenpakete in der genannten bestimmten Reihenfolge übermittelt.

2. Verfahren nach Anspruch 1, **dadurch gekennzeichnet, dass** die jeweils notwendige Adressinformation in einer IP-Adresse und einer UDP-Adresse eines Netzknotens (MG) oder Teilnehmers (TER1, TER2) besteht.

3. Verfahren nach Anspruch 1, **dadurch gekennzeichnet, dass** ein Netzknoten (MG) die richtige Zuordnung von Ursprungs und Zielangaben überprüft, bevor dieser die entsprechenden Datenpakete und unter Austausch jeweils der Ursprungs- und Zieladresse weitervermittelt.

4. Verfahren nach Anspruch 1, **dadurch gekennzeichnet, dass** wenn die Steuerungseinrichtung (SSW) das Ende der Kommunikationssitzung feststellt, indem einer der Teilnehmer (TER1, TER2) das Ende dieser Kommunikation an die Steuerungseinrichtung SSW signalisiert oder die Steuerungseinrichtung das Ende dieser Kommunikation bestimmt, diese Steuerungseinrichtung eine entsprechende Information an die betroffenen Netzknoten (MG) übermittelt, wodurch diese Netzknoten aufgefordert werden, keine weiteren Datenpakete dieser Kommunikationsbeziehung mehr weiterzuleiten.

5. Verfahren nach Anspruch 1, **dadurch gekennzeichnet, dass** zur Anrufsignalisierung vom anrufenden Teilnehmer (TER1) eine eindeutige Rufnummer oder ein eindeutiger Name des angerufenen Teilnehmers an die Steuerungseinrichtung (SSW) übergeben wird und diese Steuerungseinrichtung die Netzadresse des angerufenen Teilnehmers (TER2) daraus ermittelt.

6. Verfahren nach Anspruch 1, **dadurch gekennzeichnet, dass** für gesetzliche erlaubte Kommunikationskontrollen die Datenströme bestimmter Kommunikationsbeziehungen eingesehen oder kopiert werden, wobei die Steuerungseinrichtung (SSW) entsprechende Netzknoten (MG) anweist, zu bestimmten Zeiten bestimmte Datenströme zu kopieren und/oder an bestimmte Einrichtungen zu übermitteln.

7. Verfahren nach Anspruch 1, **dadurch gekennzeichnet, dass** die Netzknoten (MG) bestimmte Kommunikationsdaten an eine Gebührenerfassungseinrichtung übermitteln, welche eine Gebührenrechnung für die Teilnehmer erstellen.

8. Verfahren nach Anspruch 1, **dadurch gekennzeichnet, dass** die Datenpakete einer Kommunikationssitzung zwischen einem Teilnehmer (TER1) des Paketdatennetzes (MN) und einem Teilnehmer (TER3) eines anderen Netzes (INT) über einen als Grenzknoten ausgebildeten Netzknoten (BG) geführt werden, welcher die empfangenen Datenpakete entsprechend den Erfordernissen der verschiedenen Netze jeweils umcodiert.

9. Verfahren nach Anspruch 1, **dadurch gekennzeichnet, dass** Nutzdaten und/oder die Protokolldaten in einem sendenden Netzknoten (MG) umgewandelt, beispielsweise komprimiert und in einem empfangenden Netzknoten (MG) wieder rückgewandelt, beispielsweise entsprechend dekomprimiert werden.

10. Paketdatennetz (MN) mit einer Steuerungseinrichtung (SSW) und einem vermittelnden Netzknoten (MG), mit folgenden Mitteln zur Lenkung von Datenströmen zwischen Teilnehmern (TER1, TER2) dieses Paketdatennetzes (MN):
• Anrufsignalisierungsmittel zum Durchführen einer Anrufsignalisierung, wobei der anrufende Teilnehmer (TER1) eine Anfrage zu einer Kommunikationssitzung mit dem angerufenen Teilnehmer (TER2) an die Steuerungseinrichtung (SSW) übermittelt und diese Steuerungseinrichtung (SSW) eine Netzadresse des angerufenen Teilnehmers (TER2) ermittelt, **gekennzeichnet durch**
• Bestimmungsmittel zum Bestimmen eines oder mehrerer Netzknoten (MG) und zur Bestimmung jeweils der Reihenfolge dieser Netzknoten (MG) für die Übergabe der Datenpakete einer Übertragungsrichtung und
• Übergabemittel zum Übermitteln der notwendigen Adressinformation an die jeweils die betroffenen Teilnehmer (TER1, TER2) und an den/die bestimmten Netzknoten (MG) zum Weiterleiten der Datenpakete in der bestimmten Reihenfolge.

11. Steuerungseinrichtung (SSW) mit Signalisierungsschnittstellen zu den Teilnehmern (TER1, TER2) einer Kommunikationssitzung und zu einem oder mehreren Nerzknoten (MG, BG), mit den folgenden Mitteln zum Verbindungsaufbau und zur Verbindungskontrolle:
• Sende- und Empfangsmittel zum Durchführen einer Anrufsignalisierung zwischen dem anrufenden Teilnehmer (TER1) dem angerufenen Teilnehmer (TER2),
• Suchmittel zum Ermitteln einer Netzadresse des angerufenen Teilnehmers (TER2), **gekennzeichnet durch**
• Bestimmungsmittel zum Bestimmen eines oder mehrerer Netzknoten (MG) und zur Bestimmung jeweils der Reihenfolge dieser Netzknoten (MG) für die Übergabe der Datenpakete einer Übertragungsrichtung und
• Übergabemittel zum Übermitteln der notwendigen Adressinformation an jeweils die betroffenen Teilnehmer (TER1, TER2) und an den/die bestimmten Netzknoten (MG) zum Weiterleiten der Datenpakete in der bestimmten Reihenfolge.

12. Programmmodul zur Ausführung in einer Steuerungseinrichtung (SSW) mit Steuerungsmitteln zur Steuerung der folgenden Schritte:
• Durchführen einer Anrufsignalisierung zwischen dem anrufenden Teilnehmer (TER1) dem angerufenen Teilnehmer (TER2),
• Ermitteln einer Netzadresse des angerufenen Teilnehmers (TER2), **gekennzeichnet durch** die Schritte:
• Bestimmen eines oder mehrerer Netzknoten (MG) und Bestimmen jeweils der Reihenfolge dieser Netzknoten (MG) für die Übergabe der Datenpakete einer Übertragungsrichtung und
• Übermitteln der notwendigen Adressinformation an jeweils die betroffenen Teilnehmer (TER1, TER2) und an den/die bestimmten Netzknoten (MG) zum Weiterleiten der Datenpakete in der bestimmten Reihenfolge.

## Claims

1. Method for routing a sequence of (communication) data packets between users (TER1, TER2) of a connectionless packet data network (MN), a signalling being performed, between a calling user (TER1), a control device (SSW) and a called user (TER2), in the course of which the calling user (TER1) sends to the control device (SSW) a request for a communication session with the called user (TER2) and this control device (SSW) ascertaining a network address of the called user (TER2), **characterized in that** the control device (SSW) defines a network node (MG) or a particular sequence of several network nodes (MG) from several network nodes (MG) via which the data packets to be sent from one user (TER1) to the other user (TER2) in connection with the communication session are to be routed, and sends to the users (TER1, TER2) and to the defined network node(s)(MG) participating in the communication session address information respectively required for relaying or forwarding the data packets in the said defined sequence.

2. Method according to claim 1, **characterized in that** the respectively required address information consists in an IP address and a UDP address of a network node (MG) or user (TER1, TER2).

3. Method according to claim 1, **characterized in that** a network node (MG) verifies the correct assignment of origin information and destination information before it forwards the corresponding data packets with exchange of the origin address and destination address in each case.

4. Method according to claim 1, **characterized in that**, when the control device (SSW) identifies the end of the communication session, **in that** the end of this communication is signalled to the control device (SSW) by one of the users (TER1, TER2) or the control device determines the end of this communication, this control device sends a corresponding message to the participating network nodes (MG), by which these network nodes are requested not to forward any further data packets of this communication relationship.

5. Method according to claim 1, **characterized in that**, for the purpose of call signalling, the calling user (TER1) relays to the control device (SSW) a unique call number or a unique name of the called user, and this control device ascertains therefrom the network address of the called user (TER2).

6. Method according to claim 1, **characterized in that**, for legally permitted communication monitoring, the data streams of defined communication relationships are examined or copied, the control device (SSW) instructing corresponding network nodes (MG) to copy defined data streams at defined times and/or to send them to defined devices.

7. Method according to claim 1, **characterized in that** the network nodes (MG) send defined communication data to a charge logging device which compiles a charge account for the users.

8. Method according to claim 1, **characterized in that** the data packets of a communication session between a user (TER1) of the packet data network (MN) and a user (TER3) of another network (INT) are routed via a network node (BG), configured as a border gateway, which respectively recodes the received data packets according to the requirements of the different networks.

9. Method according to Claim 1, **characterized in that** payload data and/or the protocol data is converted, for example, compressed, in a transmitting network node (MG) and converted back again, for example, correspondingly decompressed, in a receiving network node (MG).

10. Packet data network (MN) with a control device (SSW) and a mediating network node (MG), with the following means for routing data streams between users (TER1, TER2) of this packet data network (MN):
• call signalling means for performing a call signalling, the calling user (TER1) sending to the control device (SSW) a request for a communication session with the called user (TER2) and this control device (SSW) ascertaining a network address of the called user (TER2), **characterized by**
• definition means for defining one or more network nodes (MG) and for defining the respective sequence of these network nodes (MG) for relaying the data packets of a transmission direction, and
• relay means for sending the necessary address information to respectively the participating users (TER1, TER2) and to the defined network node(s)(MG) for the purpose of forwarding the data packets in the defined sequence.

11. Control device (SSW) with signalling interfaces to the users (TER1, TER2) of a communication session and to one or more network nodes (MG, BG), with the following means for establishing and monitoring connections:
• transmission and receiving means for performing a call signalling between the calling user (TER1) and the called user (TER2),
• search means for ascertaining a network address of the called user (TER2), **characterized by**
• definition means for defining one or more network nodes (MG) and for defining the respective sequence of these network nodes (MG) for relaying the data packets of a transmission direction, and
• relay means for sending the necessary address information to respectively the participating users (TER1, TER2) and to the defined network node(s) (MG) for the purpose of forwarding the data packets in the defined sequence.

12. Program module for execution in a control device (SSW) with control means for controlling the following steps:
• performance of a call signalling between the calling user (TER1) and the called user (TER2)
• ascertainment of a network address of the called user (TER2), **characterized by** the steps:
• definition of one or more network nodes (MG) and definition of the respective sequence of these network nodes (MG) for relaying the data packets of a transmission direction, and
• sending of the necessary address information to respectively the participating users (TER1, TER2) and to the defined network node(s)(MG) for the purpose of forwarding the data packets in the defined sequence.

## Revendications

1. Procédé permettant d'acheminer une série de paquets de données (de communication) entre les abonnés (TER1, TER2) d'un réseau de données par paquet (MN) sans connexion, dans lequel une signalisation est effectuée entre un abonné appelant (TER1), une installation de commande (SSW) et un abonné appelé (TER2), au cours de laquelle l'abonné appelant (TER1) transmet à l'installation de commande (SSW) une demande pour une session de communication avec l'abonné appelé (TER2), et dans laquelle cette installation de commande (SSW) détermine une adresse de réseau de l'abonné appelé (TER2), **caractérisé en ce que** l'installation de commande (SSW) définit un noeud de réseau (MG) ou un certain ordre de plusieurs noeuds de réseau (MG) parmi un certain nombre de noeuds de réseau (MG), par lesquels il convient d'acheminer les paquets de données à transmettre dans le contexte de la session de communication d'un abonné (TER1) à l'autre abonné (TER2), et transmet aux abonnés (TER1, TER2) concernés par la session de communication et au (x) noeud(s) de réseau (MG) donné (s) les informations d'adressage respectivement nécessaires pour la remise ou le transfert des paquets de données dans ledit ordre donné.

2. Procédé selon la revendication 1, **caractérisé en ce que** les informations d'adressage respectivement nécessaires se composent d'une adresse IP et d'une adresse UDP d'un noeud de réseau (MG) ou d'un abonné (TER1, TER2).

3. Procédé selon la revendication 1, **caractérisé en ce qu'**un noeud de réseau (MG) vérifie l'affectation correcte des indications d'origine et de cible avant qu'il ne retransmette les paquets de données correspondants en échangeant respectivement l'adresse d'origine et de cible.

4. Procédé selon la revendication 1, **caractérisé en ce que** lorsque l'installation de commande (SSW) constate la fin de la session de communication, **en ce que** l'un des abonnés (TER1, TER2) signale à l' installation de commande (SSW) la fin de cette communication ou que l'installation de commande définit la fin de cette communication, cette installation de commande transmet une information correspondante aux noeuds de réseau (MG) concernés de sorte que ces noeuds de réseau sont invités à ne plus retransmettre des paquets de données supplémentaires de cette relation de communication.

5. Procédé selon la revendication 1, **caractérisé en ce que** pour la signalisation d'appel, l'abonné appelant (TER1) remet à l'installation de commande (SSW) un numéro d'appel unique ou un nom unique de l'abonné appelé et cette installation de commande en détermine l'adresse de réseau de l'abonné appelé (TER2).

6. Procédé selon la revendication 1, **caractérisé en ce que** pour les contrôles de communication autorisés par la loi, les flux de données de certaines relations de communication sont examinés ou copiés, l'installation de commande (SSW) ordonnant aux noeuds de réseau (MG) correspondants de copier certains flux de données à certains instants et/ou de les transmettre à certaines installations.

7. Procédé selon la revendication 1, **caractérisé en ce que** les noeuds de réseau (MG) transmettent certaines données de communication à une installation de détection de taxe qui établit une facture de taxation pour l'abonné.

8. Procédé selon la revendication 1, **caractérisé en ce que** les paquets de données d'une session de communication entre un abonné (TER1) du réseau de données par paquet (MN) et un abonné (TER3) d'un autre réseau (INT) sont acheminés à travers un noeud de réseau (BG) réalisé comme un noeud limite qui recode respectivement les paquets de données reçus selon les besoins des différents réseaux.

9. Procédé selon la revendication 1, **caractérisé en ce que** les données utiles et/ou les données de protocole sont converties dans un noeud de réseau (MG) émetteur, par exemple comprimées, et reconverties dans un noeud de réseau (MG) récepteur, par exemple décomprimées de façon correspondante.

10. Réseau de données par paquet (MN) avec une installation de commande (SSW) et un noeud de réseau (MG) de commutation, comprenant les moyens suivants permettant d'acheminer des flux de données entre les abonnés (TER1, TER2) de ce réseau de données par paquet (MN) :
- moyens de signalisation d'appel permettant d'effectuer une signalisation d'appel, l'abonné appelant (TER1) transmettant à l'installation de commande (SSW) une demande pour une session de communication avec l'abonné appelé (TER2) et cette installation de commande (SSW) déterminant une adresse de réseau de l'abonné appelé (TER2),
**caractérisé par**
- des moyens de définition permettant de définir un ou plusieurs noeuds de réseau (MG) et de définir respectivement l'ordre de ces noeuds de réseau (MG) pour la remise des paquets de données d'un sens de transmission, et
- des moyens de remise permettant de transmettre les informations d'adressage nécessaires à l'abonné (TER1, TER2) respectivement concerné et au(x) noeud(s) de réseau (MG) donné(s) pour la retransmission des paquets de données dans l'ordre donné.

11. Installation de commande (SSW) comprenant des interfaces de signalisation avec les abonnés (TER1, TER2) d'une session de communication et un ou plusieurs noeuds de réseau (MG, BG) avec les moyens suivants pour l'établissement de la connexion et le contrôle de la connexion :
- des moyens d'émission et de réception permettant d'effectuer une signalisation d'appel entre l'abonné appelant (TER1) et l'abonné appelé (TER2),
- des moyens de recherche permettant de déterminer une adresse de réseau de l'abonné appelé (TER2),
**caractérisée par**
- des moyens de définition permettant de définir un ou plusieurs noeuds de réseau (MG) et de définir respectivement l'ordre de ces noeuds de réseau (MG) pour la remise des paquets de données d'un sens de transmission, et
- des moyens de remise permettant de transmettre les informations d'adressage nécessaires à l'abonné (TER1, TER2) respectivement concerné et au(x) noeud(s) de réseau (MG) donné(s) pour la retransmission des paquets de données dans l'ordre donné.

12. Module de programme à exécuter dans une installation de commande (SSW) avec des moyens de commande permettant de commander les étapes suivantes consistant à :
- effectuer une signalisation d'appel entre l'abonné appelant (TER1) et l'abonné appelé (TER2),
- déterminer une adresse réseau de l'abonné appelé (TER2),
**caractérisé par** les étapes consistant à :
- définir un ou plusieurs noeuds de réseau (MG) et définir respectivement l'ordre de ces noeuds de réseau (MG) pour la remise des paquets de données d'un sens de transmission, et
- transmettre les informations d'adressage nécessaires à l'abonné (TER1, TER2) respectivement concerné et au(x) noeud(s) de réseau (MG) donné(s) pour la retransmission des paquets de données dans l'ordre donné.
